**Europäisches Patentamt**

**European Patent Office**

**Office européen des brevets**

(19)

(11) Veröffentlichungsnummer: **0 194 463**
**A2**

(12) **EUROPÄISCHE PATENTANMELDUNG**

(21) Anmeldenummer: **86101854.7**

(22) Anmeldetag: **13.02.86**

(51) Int. Cl.⁴: **G01N 21/78** , G01N 31/22

(30) Priorität: **26.02.85 DE 3506684**

(43) Veröffentlichungstag der Anmeldung:
**17.09.86 Patentblatt 86/38**

(84) Benannte Vertragsstaaten:
**AT BE CH DE FR GB IT LI NL**

(71) Anmelder: **Siemens Aktiengesellschaft Berlin und München**
**Wittelsbacherplatz 2**
**D-8000 München 2(DE)**

(72) Erfinder: **Kimmel, Heinrich, Dr.**
**Am Ruhstein 59**
**D-8520 Buckenhof(DE)**
Erfinder: **Montag, Bernhard**
**Nordring 22**
**D-8550 Forchheim(DE)**
Erfinder: **Gumbrecht, Walter, Dr.**
**Am Europakanal 2**
**D-8520 Erlangen(DE)**

(54) Verfahren zur kontinuierlichen Messung des Partialdruckes von Gasen und Dämpfen.

(57) Als chemisch sensitive Komponente zur kontinuierlichen Messung des Partialdruckes von Gasen und Dämpfen wird erfindungsgemäß ein optisches Filter, dessen optische Transparenz sich analog dem Partialdruck des zu messenden Gases oder Dampfes einstellt, verwendet. Der Farbfilter besteht vorzugsweise aus einem Gemisch von mindestens einem saueren oder basischen Farbbildner bzw. Farbstoff, insbesondere Triphenylmethansystemen mit mindestens einer komplementären aciden oder basischen Substanz. Die optische Transparenz kann fotoelektronisch, insbesondere mit einer Glühlampe als Lichtquelle und einer Fotodiode oder einem Fototransistor, als Empfänger gemessen werden.

FIG 2

EP 0 194 463 A2

Verfahren zur kontinuierlichen Messung des Partialdruckes von Gasen und Dämpfen

Die Erfindung betrifft ein Verfahren zur kontinuierlichen Messung des Partialdruckes von Gasen und Dämpfen mit chemisch sensitiven Komponenten.

Zur Bestimmung des Partialdruckes von Gasen kann nach bekannten Verfahren der relevante Gasanteil in einem bestimmten Luftvolumen mittels eines Prüfröhrchens erfaßt werden. Solche Verfahren sind nicht kontinuierlich durchführbar. Andere praktizierte Verfahren zur Partialdruckmessung beispielsweise die Massenspektrometrie erfordern aufwendige Anlysengeräte. Vielfach ist die hiermit mögliche Erfassung aller vorhandener Gaskomponenten nicht erforderlich. Großes Bedürfnis besteht für die Ermittlung von einzelnen vorgegebenen Gaskomponenten mit preisgünstigen Bauteilen. Die hierfür bekannten und eingesetzten chemisch sensitiven Sensoren (siehe z.B. Regelungstechnische Praxis, 26. Jahrgang 1984, Heft 7, Seite 299 ff., insbesondere Tabelle 1) arbeiten mit aufgeheizten Metallwendeln oder aufgeheizten Metalloxid-schichten. Die ferner bekannten Sensoren auf der Basis von Feststoffelektrolyten oder dem Palladium-Feldeffekt-Transistor sind nur für die Messung von Sauerstoff bzw. Wasserstoff einsetzbar.

Aufgabe der Erfindung ist es ein Verfahren zu entwickeln, das die kontinuierliche Messung des Partialdruckes für ein breites Spektrum von Gasen auch bei niedrigen Temperaturen ermöglicht.

Diese Aufgabe wird dadurch gelöst, daß erfindungsgemäß als chemisch sensitive Komponente ein optisches Filter verwendet wird, dessen optische Transparenz sich analog zum Partialdruck des zu messenden Gases oder Dampfes einstellt. Der zu messende Gasanteil, gegebenenfalls gemischt mit Luft, wirkt auf Reagenzien ein, die eine der/dem zu messenden Konzentration/Partialdruck analoge reversible Farbreaktion und/oder Extinktionsänderung aufweisen. Die dem Partialdruck/ der Konzentration analoge Farbänderung kann fotoelektronisch gemessen werden.

Die Auslesung kann durch Kombination von wahlweise einer Fotodiode, einem Fototransistor, einem Fotowiderstand oder einer Fotozelle einerseits -als Lichtempfänger -mit einer Lumineszenzdiode, einer Entladungslampe oder einer Strahlungsquelle nach dem Prinzip der Chemolumineszenz oder Fotolumineszenz andererseits -als Lichtquelle -erfolgen.

Das erfindungsgemäße Verfahren ist mit wenigen einfachen Bauelementen in einem großen Temperaturbereich vorzugsweise bei Raumtemperatur durchführbar. Es ermöglicht die Bestimmung der verschiedensten Gase und Dämpfe auch noch in kleinen Konzentrationen. Die Nachweisgrenzen liegen im Bereich von 10 ppm.

Nach dem erfindungsgemäßen Verfahren kann sowohl die Konzentration von Gasen, wie z.B. Ammoniak als auch von Dämpfen, von beispielsweise Äther, Aceton, Äthylmethylketon, Acetonitril, Ameisensäure, Isopropylalko-hol, Dioxan, Pyridin, Äthylacetat, Äthanol, Butylacetat, Propanol, Isobutanol, Äthylenglycolmonomethyläther, Dimethyl-formamid, Dichlormethan, Chloroform, Dimethylsulfoxid, Butanol und Amylalkohol ermittelt werden. Die Gase oder Dämpfe können auch im Gemisch mit einem Trägergas, beispielsweise Luft, vorliegen. Das Verfahren kann somit mit Vorteil zur Arbeitsplatzüberwachung und für Kontrollen im Rahmen des Umweltschutzes eingesetzt werden.

Zur Durchführung des erfindungsgemäßen Verfahrens nach einer vorteilhaften Ausführungsform der Erfindung wird ein als chemisch sensitive Komponente wirkendes Farbfilter, das aus einem Gemisch von mindestens einem basischen oder saueren Farbbildner und mindestens einer komplementären saueren oder basischen Verbindung besteht und auf einen optischen Träger aufgebracht ist, bei Raum-oder Außentemperatur einem Gas-oder Dampfdruck ausgesetzt.

Gemäß einer weiteren vorteilhaften Ausführungsform der Erfindung kann das Farbfilter auch aus einem Gemisch von mindestens einem basischen oder saueren Farbstoff und mindestens einer komplementären saueren oder basischen Verbindung bestehen.

Als Farbbildner sind beispielsweise Triphenylmethan-Systeme geeignet, wie z.B. Kristallviolettlacton.

Geeignete Farbstoffe sind Triphenylmethanfarbstoffe, wie z.B. Phthaleine (Phenolphthalein) und Sulfonphthaleine (Bromthymolblau).

Geeignete saure komplementäre Verbindungen sind z.B. Bisphenol-A und Salicylsäure.

Geeignete basische komplementäre Verbindungen sind z.B. p-Toluidin, p-Chloranilin.

Als Trägermaterialien sind geeignet Keramik, Glas und Kunststoff, wie z.B. Polyacrylate.

Geeignete Matrixsubstanzen, in welche das Gemisch eingebettet werden kann, sind z.B. Polyäthylen, Polyvinylch-lorid, Silicone und Kollodium.

Das erfindungsgemäße Verfahren, das sich besonders zum Nachweis von Alkohol und Ammoniak eignet, wird mit Vorteil bei Sensoren und Analysengeräten angewendet.

Die Erfindung wird durch die folgenden Beispiele und die Zeichnung näher erläutert.

Beispiel 1

Zur Durchführung des Verfahrens wurde ein optisches Filter auf folgende Weise hergestellt:

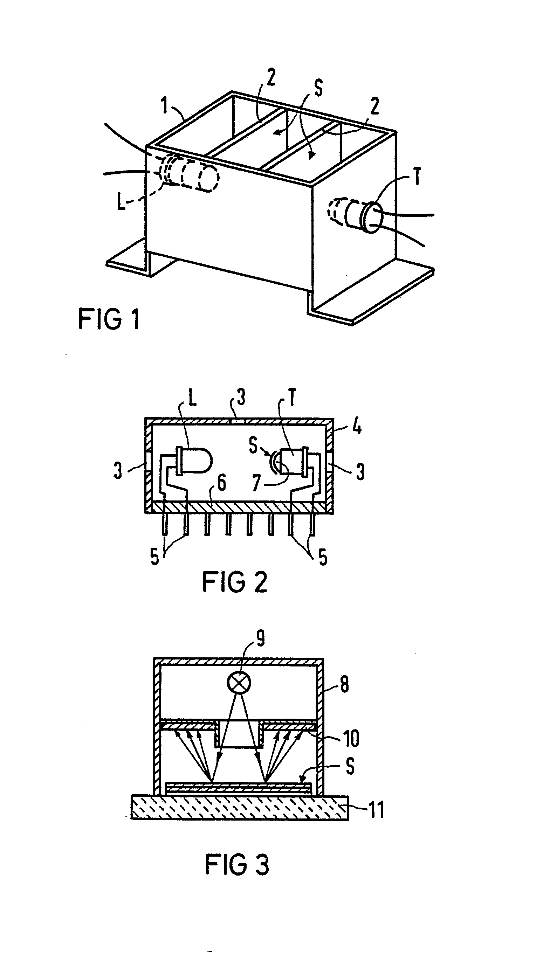

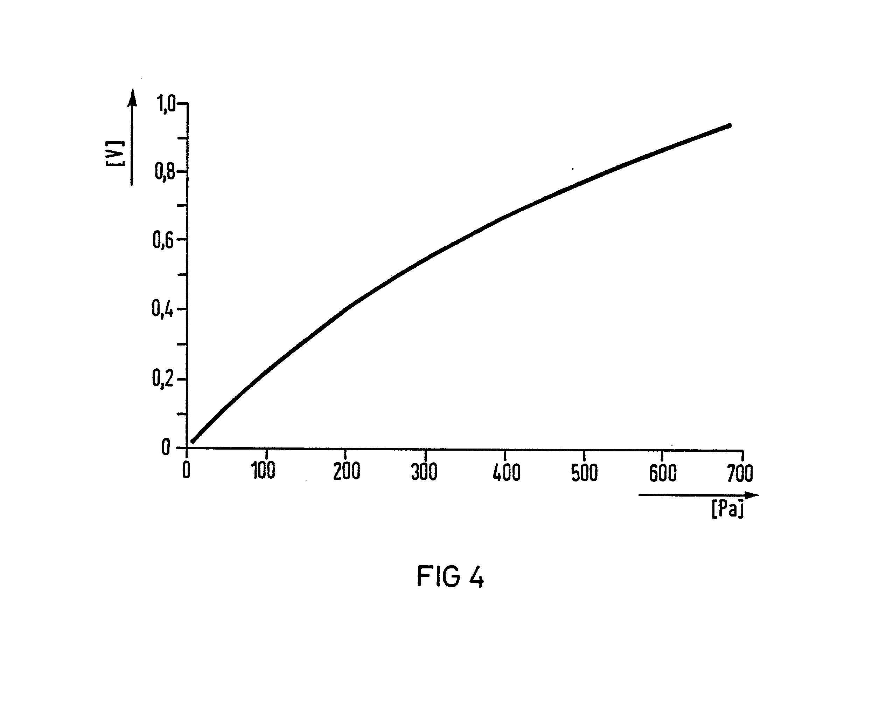

30 mg Kristallviolettlacton, 70 mg Bisphenol-A und 100 mg Polyvinylchlorid wurden in 50 ml Tetrahydrofuran gelöst und die Lösung auf eine Polyvinylacetat-Folie aufgesprüht. Das optische Filter, siehe S der FIG 1, wurde in eine Meßanordnung entsprechend FIG 1 eingebracht und verschiedenen Äthanoldampfdrücken in Luft ausgesetzt. Die verschiedenen Äthanol-Dampfdrücke in Luft wurden hergestellt, indem als Äthanolquelle Äthanol-Wasser-Gemische verschiedener Konzentration dienten. Die auf diese Weise erhaltenen unterschiedlichen Dampfdrücke zeigten an der Meßvorrichtung gemäß FIG 1 die in FIG 4 eingetragenen Meßpunkte. In FIG 4 ist als Ordinate die durch den Fotostrom an einem Widerstand hervorgerufene Spannung und als Abszisse der Äthanoldampfdruck in der Meßanordnung in Pa aufgetragen. Man sieht daraus, daß mit zunehmendem Äthanoldampfdruck der Fotostrom zunimmt. Dies ist eine Folge der zunehmenden Tranzparenz der chemosensitiven Schicht, wobei der Vorgang reversibel ist.

Beispiel 2

Ein Teil der obigen Lösung wurde direkt auf einen Fototransistor aufgesprüht und in eine Meßanordnung entsprechend FIG 2 eingesetzt.

FIG 1 zeigt in perspektivischer Ansicht einen umseitig geschlossenen Rahmen 1, der nach oben und unten offen ist, um einen Gasdurchfluß zu gewährleisten. Auf zwei gegenüberliegenden Flächen des Rahmens 1 sind die Lumineszenzdiode L und der Fototransistor T angebracht. Im Strahlengang zwischen L und T befinden sich zwei Scheiben 2 aus Polytetrafluoräthylen (Hostaphan ®) mit der aufgebrachten sensitiven Schicht S.

FIG 2 zeigt im Schnitt ein DIL-Gehäuse 4 in Seitenansicht. Es trägt mehrere Bohrungen 3, um den Gasfluß zu ermöglichen. Im Innern des DIL-Gehäuses 4 sind die Lumineszenzdiode L und ihr gegenüber der Fototransistors T angebracht. Die Anschlüsse sind an verschiedene Steckstifte 5 der Bodenplatte 6 geführt. Die chemosensitive Schicht S ist in dieser Ausführungsform unmittelbar auf die Frontlinse 7 des Fototransistors T aufgebracht.

FIG 3 zeigt im Schnitt ein zylindrisches Metallgehäuse 8 mit der Lichtquelle einer Glühlampe 9, die in der dargestellten Weise die chemosensitive Schicht S beleuchtet. Das zurückgestreute Licht wird von einer ringförmigen fotoempfindlichen Schicht 10 aufgefangen. Die chemosensitive Schicht ist auf eine porös-durchlässige Keramikscheibe 11 aufgebracht, die ihrerseits gasdurchlässig ist.

**Ansprüche**

1. Verfahren zur kontinuierlichen Messung des Partialdruckes von Gasen und Dämpfen mit chemisch sensitiven Komponenten, **dadurch gekennzeichnet**, daß als chemisch sensitive Komponente ein optisches Filter verwendet wird, dessen optische Transparenz sich analog zum Partialdruck des zu messenden Gases oder Dampfes einstellt und daß die optische Transparenz gegebenenfalls fotoelektronisch gemessen wird.

2. Verfahren nach Anspruch 1, **dadurch gekennzeichnet**, daß man ein als chemisch sensitive Komponente wirkendes Farbfilter, das aus einem Gemisch von mindestens einem basischen oder sauren Farbbildner und mindestens einer komplementären sauren oder basischen Verbindung besteht und auf einem Träger aufgebracht ist, bei Raum-oder Außentemperaur einem Gas-oder Dampfdruck aussetzt.

3. Verfahren nach Anspruch 1, **dadurch gekennzeichnet**, daß man ein als chemisch sensitive Komponente wirkendes Farbfilter, das aus einem Gemisch von mindestens einem basischen oder sauren Farbstoff und mindestens einer komplementären sauren oder basischen Verbindung besteht und auf einem Träger aufgebracht ist, bei Raum-oder Außentemperatur einem Gas-oder Dampfdruck aussetzt.

4. Verfahren nach Anspruch 1, 2 oder 3, **dadurch gekennzeichnet**, daß das Gemisch in eine Matrixsubstanz eingebettet wird.

5. Verfahren nach den vorangegangenen Ansprüchen, **dadurch gekennzeichnet**, daß für die fotoelektronische Messung als Lichtquelle eine Glühlampe und als Lichtempfänger eine Fotodiode oder ein Fototransistor verwendet werden.

0 194 463

FIG 1

FIG 2

FIG 3

FIG 4